# EUROPÄISCHE PATENTSCHRIFT

(11) **EP 4 215 348 B1**
(45) Veröffentlichungstag und Bekanntmachung des Hinweises auf die Patenterteilung: **15.10.2025**
(21) Anmeldenummer: 23151224.5
(22) Anmeldetag: 12.01.2023
(51) Int. Cl.: B29C 71/00, B33Y 40/20, B33Y 80/00, B29C 64/35

(54) **VERFAHREN ZUM GLÄTTEN EINER OBERFLÄCHE EINES IN EINEM ADDITIVEN HERSTELLUNGSVERFAHREN HERGESTELLTEN KÖRPERS SOWIE IN EINEM ADDITIVEN HERSTELLUNGSVERFAHREN HERGESTELLTER KÖRPER**
METHOD FOR SMOOTHING A SURFACE OF A BODY PRODUCED IN AN ADDITIVE PRODUCTION METHOD AND BODY PRODUCED IN AN ADDITIVE PRODUCTION METHOD
PROCÉDÉ DE LISSAGE D'UNE SURFACE D'UN CORPS FABRIQUÉ SELON UN PROCÉDÉ DE FABRICATION ADDITIVE ET CORPS FABRIQUÉ SELON UN PROCÉDÉ DE FABRICATION ADDITIVE

(30) Priorität: 18.01.2022 DE 102022101099
(43) Veröffentlichungstag der Anmeldung: 26.07.2023
(73) Patentinhaber: Oechsler AG, 91522 Ansbach (DE)
(72) Erfinder: Fischer, Christian, 91732 Merkendorf (DE); Emmert, Michael, 91522 Ansbach (DE)
(74) Vertreter: Canzler & Bergmeier Patentanwälte Partnerschaft mbB

(56) Entgegenhaltungen:
- WO-A1-2020/099096
- US-A1- 2021 170 702

## Beschreibung

Die vorliegende Erfindung betrifft ein Verfahren zum Glätten einer Oberfläche eines in einem additiven Herstellungsverfahren hergestellten Körpers, gemäß Anspruch 1, bei dem der Körper in einer Kammer platziert und anschließend einer Lösungsmittelatmosphäre ausgesetzt wird, die eine Oberfläche des Körpers glättet.

Additive Herstellungsverfahren und aus diesen hergestellte Körper sind seit Langem bekannt. Additive Herstellungsverfahren können beispielsweise für die zeitsparende Herstellung von Prototypen aber auch für eine reguläre Produktion verwendet werden. In jüngerer Zeit werden vor allem sogenannte 3D-Drucker für additive Herstellungsverfahren verwendet. Diese können mit verschiedenen Verfahren arbeiten. Meist wird ein Bauteil schichtweise aus zuvor pulverförmigem oder flüssigem Material verfestigt. Beispielsweise werden thermoplastische Materialien mit Druckköpfen ähnlich beispielsweise dem Tintenstrahldruck bei Druckerzeugnissen schichtweise aufgetragen. Auch können Pulver schichtweise durch Sintern verfestigt werden.

Gemeinsam ist diesen Verfahren, dass in der Regel nach dem Druck eine Nachbehandlung des erzeugten Körpers notwendig ist, um zu einem akzeptablen Ergebnis zu gelangen. Typischerweise muss die Oberfläche des Körpers nachbehandelt werden um beispielsweise Grate oder Stabilisierungsstrukturen zu entfernen. Ebenfalls kann die Oberfläche nach dem additiven Herstellungsverfahren sehr rau sein und muss anschließend geglättet werden. Dies kann beispielsweise mittels einer Behandlung des Körpers in einer Lösungsmittelatmosphäre durchgeführt werden.

In manchen Fällen ist es für den in einem additiven Herstellungsverfahren hergestellten Körper vorteilhaft, zumindest in bestimmten Bereichen eine erhöhte Rauigkeit aufzuweisen. Diese Bereiche müssten nach einem den gesamten Körper betreffenden Glättungsverfahren wieder aufgeraut werden, was einen zusätzlichen Verfahrensschritt bedeutet und damit sehr aufwendig ist. Zu diesem Zweck ist es beispielsweise aus den Dokumenten US 2021/0170702 A1 und WO 2020/099096 A1 bekannt, bestimmte Bereiche eines in einem additiven Herstellungsverfahren hergestellten Körpers abzudecken.

Aufgabe der vorliegenden Erfindung ist es, das bekannte Glättungsverfahren weiterzuentwickeln.

Die Aufgabe wird gelöst durch ein Verfahren mit den Merkmalen des unabhängigen Patentanspruchs.

Vorgeschlagen wird ein Verfahren zum Glätten einer Oberfläche eines in einem additiven Herstellungsverfahren aus einem Elastomer, Thermoplast und/oder Duroplast hergestellten Körpers, bei dem der Körper in einer Kammer platziert und anschließend einer Lösungsmittelatmosphäre ausgesetzt wird, die eine Oberfläche des Körpers glättet. Erfindungsgemäß wird die Oberfläche, bevor der Körper in der Kammer der Lösungsmittelatmosphäre ausgesetzt wird, in zumindest einem Teilbereich mit einer Schutzschicht abgedeckt. Hierdurch können Bereiche, die mit der Schutzschicht bedeckt sind, gezielt weniger stark geglättet oder sogar in einem ursprünglichen Zustand belassen werden.

Eine rauere Oberfläche ist beispielsweise bei nachfolgenden Verarbeitungsprozessen wie dem Färben oder dem Zusammenfügen mehrerer Körper vorteilhaft. Auch können hierdurch physikalische Eigenschaften des Körpers wie Elastizität, Wandstärken und optische Eigenschaften gezielt beeinflusst werden. Eine Beeinflussung der Maße eines passgenau gefertigten Körpers durch die Glättung wird beispielsweise im Bereich der Schutzschicht vermieden. Durch das erfindungsgemäße Verfahren können Prozessschritte nach dem Glätten zum Entfernen oder aufrauen geglätteter Oberflächenabschnitte vermieden werden. Hierdurch lässt sich die Effizienz in einem Herstellungsprozess steigern, womit die Kosten für den Herstellungsprozess gesenkt werden. Der Körper kann beispielsweise einen Bereich mit der Schutzschicht oder auch mehrere, voneinander getrennte Bereiche mit der Schutzschicht aufweisen. Die Schutzschicht ist insbesondere ausgebildet, den bedeckten Bereich bzw. die bedeckten Bereiche zumindest zum Teil von der Lösungsmittelatmosphäre abzuschirmen.

Der Körper wird nach dem Entfernen der Schutzschicht in dem zumindest einen Teilbereich mit einem weiteren Körper, insbesondere form-, kraft- und/oder stoffschlüssig, verbunden. Eine raue Oberfläche ist beispielsweise für eine kraftschlüssige Verbindung vorteilhaft, da eine erhöhte Reibung vorliegt. Dies ist auch bei einer formschlüssigen Verbindung der Fall, bei der ebenfalls eine erhöhte Reibung die Stabilität der Verbindung erhöht. Bei einer stoffschlüssigen Verbindung ist eine raue Oberfläche für die notwendige chemische Reaktion vorteilhaft. Beispielsweise haftet ein Kleber an einer rauen Oberfläche besser als einer glatten Oberfläche. Außerdem spielt die Größe der reaktiven Oberfläche, die bei größerer Rauigkeit erhöht ist, für chemische Reaktionen eine wichtige Rolle. Selbstverständlich kann der Körper auch in übrigen Bereichen, insbesondere in Bereichen in denen keine Schutzschicht vorgesehen wurde, mit weiteren Körpern in der obengenannten Weise verbunden werden. Auf diese Weise können beispielsweise in 3D-Druckern Bauteile hergestellt werden, die wesentlich größer sind als das eigentlich zur Herstellung verfügbare Volumen des Druckers.

Elastomere, Thermoplaste und/oder Duroplaste eignen sich einerseits besonders für additive Herstellungsverfahren und andererseits für ein Glätten in Lösungsmittelatmosphären. Elastomere sind formfeste aber elastisch verformbare Kunststoffe. Thermoplaste lassen sich in einem bestimmten Temperaturbereich reversibel verformen. Hierbei ist zu beachten, dass es ebenfalls thermoplastische Elastomere gibt, die ebenfalls als Material für den Körper geeignet sind. Duroplaste sind nach einem Aushärten nicht mehr verformbar. Der Körper kann beispielsweise aus Polyamid 12 (PA12) und/oder thermoplastischem Polyurethan (TPU) hergestellt sein. Aufgeschäumtes TPU eignet sich besonders für Polsterungen oder Isolierungen. Weitere denkbare Materialien sind beispielsweise Polyamid 6, Polyamid 11, Polyeherimid (PEI), Polyactid (PLA), Acrylnitril-Butadien-Styrol (ABS), Polymethylmethacrylat (PMMA), Acrylnitril-Styrol-Acrylat (ASA), Polycarbonat (PC) und/oder Polyethylenterephthalat.

Es ist vorteilhaft, wenn die Schutzschicht lösungsmitteldurchlässig ist, so dass der von der Schutzschicht abgedeckte Teilbereich im Vergleich zur freiliegenden Oberfläche weniger stark mit der Lösungsmittelatmosphäre reagiert, oder dass die Schutzschicht lösungsmittelundurchlässig ist, so dass der von der Schutzschicht abgedeckte Teilbereich nicht mit der Lösungsmittelatmosphäre reagiert und in einem ursprünglichen Zustand verbleibt. Falls die Schutzschicht lösungsmitteldurchlässig ist, kann das Maß der Glättung der Oberfläche unterhalb der Schutzschicht individuell angepasst werden, je nach Grad der Durchlässigkeit. Hierdurch ist es möglich den Körper den jeweiligen Anforderungen anzupassen. Bei einer lösungsmittelundurchlässigen Schutzschicht verbleibt der Körper unterhalb der Schutzschicht in einem ursprünglichen Zustand nach der additiven Fertigung. Es ist denkbar, dass der Körper in einem oder mehreren Bereichen mit einer lösungsmitteldurchlässigen Schutzschicht und in einem oder mehreren anderen Bereichen mit einer lösungsmittelundurchlässigen Schutzschicht versehen wird. Der Grad der Durchlässigkeit der Schutzschicht kann beispielsweise mit deren Dicke und/oder Zusammensetzung beeinflusst werden.

Vorteile bringt es zudem mit sich, wenn der Körper bei der Herstellung mit wenigstens einer Markierung für ein Platzieren der Schutzschicht versehen wird. Hierdurch wird es einem Menschen aber auch einem automatisierten Applikator erleichtert, die Schutzschicht auf dem Körper in dem gewünschten Bereich zu platzieren. Die Markierung kann beispielsweise eine zur restlichen Oberfläche des Körpers unterschiedliche Farbe aufweisen. Auch kann die Markierung durch eine im Vergleich zur restlichen Oberfläche unterschiedliche Höhe gegeben sein. Die Markierung kann allgemein eine unterschiedliche Oberflächenbeschaffenheit, insbesondere nur in einem Randbereich des für die Schutzschicht vorgesehenen Oberflächenabschnitts, aufweisen.

Auch ist es vorteilhaft, wenn die Schutzschicht lösungsmittelresistent, abdichtend und/oder reversibel lösbar ist, wobei die Schutzschicht insbesondere von einer Folie oder einem Lack gebildet ist. Eine lösungsmittelresistente Schutzschicht kann die Oberfläche des Körpers in besonderer Weise vor der Lösungsmittelatmosphäre schützen, wobei in diesem Fall sichergestellt ist, dass die Schutzschicht das Glätten der übrigen Oberfläche des Körpers nicht beeinflusst. Insbesondere gehen Teile der Schutzschicht nicht in die Lösungsmittelatmosphäre über. Eine abdichtende Schutzschicht stellt sicher, dass Teile der Lösungsmittelatmosphäre in dem abgedeckten Bereich nicht in unerwünschter Weise an die Oberfläche gelangen. Außerdem wird auf diese Weise beispielsweise ein exakter Übergang zwischen dem abgedeckten und dem freiliegenden Bereich der Oberfläche des Körpers erzeugt. Eine abdichtende Schutzschicht passt sich bei einem Auftragen beispielsweise der Rauigkeit der Oberfläche des Körpers an.

Eine reversibel lösbare Schutzschicht kann nach dem Glätten der Oberfläche des Körpers in einfacher Weise von dem Körper entfernt werden. Die Schutzschicht kann gegebenenfalls wiederverwendet werden, insbesondere, wenn sie lösungsmittelresistent ist. Für die Schutzschicht eignen sich in besonderer Weise Folien oder Lacke, insbesondere aufgrund der einfachen Handhabung und der kommerziellen Verfügbarkeit. Die Schutzschicht kann aber ebenfalls durch ein Harz, durch eine Farbe oder allgemein durch eine deckende Flüssigkeit gebildet sein.

Vorteilhaft ist es zudem, wenn die Schutzschicht zumindest teilweise aus Latex besteht. Latex ist ein kostengünstiges und leicht zu verarbeitendes Material, dass gegebenenfalls die Anforderungen an die erfindungsgemäße Schutzschicht erfüllt. Latex kann für die Schutzschicht insbesondere auch mit anderen Materialien kombiniert werden. Beispielweise kann das Latex oder eine Latexmischung in flüssiger Form auf die Oberfläche des Körpers aufgetragen werden.

Ebenso bringt es Vorteile mit sich, wenn die Schutzschicht, insbesondere nach einer Entnahme des Körpers aus der Kammer, vorzugsweise mechanisch oder chemisch, entfernt wird. Das Entfernen kann von einem Menschen oder automatisch durch eine entsprechende Vorrichtung durchgeführt werden. Ein mechanisches entfernen kann beispielsweise in dem Abziehen der Schutzschicht bestehen. Auch kann die Schutzschicht beispielsweise durch Abschleifen entfernt werden. Ein chemisches Entfernen der Schutzschicht kann beispielsweise durch Erhitzen, durch Bestrahlung, oder durch die Verwendung eines Lösungsmittels, dass sich insbesondere von der Lösungsmittelatmosphäre unterscheidet, durchgeführt werden.

Des Weiteren ist es vorteilhaft, wenn der Körper vor dem Hinzufügen und/oder nach dem Entfernen der Schutzschicht eingefärbt wird. Ein Färben des Körpers vor dem Hinzufügen der Schutzschicht ist beispielsweise vorteilhaft, wenn der Körper eine einheitliche Farbe erhalten soll. Eine raue Oberfläche des Körpers nimmt eine Farbe gegebenenfalls besser an als eine geglättete Oberfläche. Daher kann ein Färben des Körpers nach dem Entfernen der Schutzschicht insbesondere dazu führen, dass der Körper nur im Bereich der Schutzschicht eingefärbt wird oder dort die Farbe besonders deutlich in Erscheinung tritt. Ein Färben vor dem Hinzufügen und nach dem Entfernen der Schutzschicht führt insbesondere dazu, dass im Bereich der Schutzschicht eine unterschiedliche Farbgebung im Vergleich zur übrigen Oberfläche des Körpers vorliegt.

Ebenso bringt es Vorteile mit sich, wenn nach dem Entfernen der Schutzschicht in dem zumindest einen Teilbereich eine Funktionsbeschichtung auf den Körper aufgebracht wird. Auch für die Haftung einer Funktionsbeschichtung kann eine erhöhte Rauigkeit auf der Oberfläche vorteilhaft sein. Eine Funktionsbeschichtung kann dem Körper beispielsweise bestimmte optische oder haptische Eigenschaften verleihen. Denkbar ist eine Hochglanz- oder Spiegelbeschichtung. Auch eine magnetische oder elektrisch leitende Funktionsbeschichtung ist denkbar. Weitere Möglichkeiten einer Funktionsbeschichtung stellen beispielsweise eine wasserabweisende oder fettabweisende Beschichtung dar. Außerdem kann die durch die Funktionsbeschichtung gezielt eine Reibung an der Oberfläche vermindert oder erhöht werden oder beispielsweise eine Kratzfestigkeit hergestellt werden.

Des Weiteren ist es vorteilhaft, wenn der Körper zumindest Teilweise mit einer Gitterstruktur hergestellt wird. Durch die Gitterstruktur kann mit geringem Materialeinsatz ein großes Volumen ausgefüllt werden. Auch lässt sich die Elastizität des Körpers durch die Gitterstruktur exakt steuern. Eine Gitterstruktur ist eine sich wiederholende regelmäßige Struktur, die beispielsweise aus gleichen Einheitszellen aufgebaut ist. Insbesondere ist damit eine Hohlstruktur gemeint, in der nur Gitterstäbe Material des Körpers umfassen. Die Gitterstäbe können beispielsweise in Form von Kanten regelmäßiger geometrischer Körper angeordnet sein. Es ist ebenfalls denkbar, dass der Körper teilweise mit einer Gitterstruktur und teilweise mit einer massiven, also mit einer mit Material ausgefüllten Struktur hergestellt wird.

Vorteilhaft ist es, wenn die Lösungsmittelatmosphäre Chloroform, Tetrahydrofuran, Dimethylformamid, Dimethylacetamid, N-Methylpyrrolidon, Dimethylsulfoxid, Hexafluorisopropanol, Pyridin, Benzylalkohol, Methanol, Ethylacetat, Diethylether, Aceton, n-Hexan, Toluol, Tetrachlorkohlenstoff und/oder Ethylenglykolmonoethylether enthält. Die genannten Stoffe eigenen sich besonders für typische Materialen, insbesondere die bereits aufgezählten Elastomere, Thermoplasten und Duroplasten, des in einem additiven Herstellungsverfahren hergestellten Körpers. Außerdem kommen für die Lösungsmittelatmosphäre beispielsweise allgemein Alkohole, Carbonsäureester, Ether, Ketone, Alkane, aromatische Kohlenwasserstoffe, halogenierte aliphatische Kohlenwasserstoffe und/oder Glykolether in Frage.

Die Lösungsmittelatmosphäre ist beispielsweise ein Aerosol, insbesondere ein Nebel, also ein Gemisch aus einem zerstäubten Lösungsmittel und beispielsweise Luft. Andererseits ist es denkbar Lösungsmitteldampf in reiner Form oder als Gasgemisch ebenfalls beispielsweise mit Luft zu verwenden.

Die Kammer kann beispielsweise zur Beschleunigung der Reaktion auf eine Temperatur von 25 bis 100 °C erwärmt werden. Vorzugsweise findet das Verfahren aber bei Zimmertemperatur statt. Die Lösungsmittelatmosphäre kann beispielsweise durch ein Versprühen eines Lösungsmittels oder durch ein Zerstäuben des Lösungsmittels, beispielsweise mittels eines Ultraschallzerstäubers hergestellt werden. Ein gezieltes Verdampfen des Lösungsmittels ist ebenfalls denkbar. Aufgrund der Gefahr für die Gesundheit und einer potentiellen Explosionsgefahr ist die Kammer während der Präsenz der Lösungsmittelatmosphäre vorzugsweise hermetisch abgedichtet. Es ist denkbar, dass die Lösungsmittelatmosphäre vor einem Öffnen der Kammer am Ende des Verfahrens abgesaugt wird.

Ebenso ist es vorteilhaft, wenn der Körper bereits bei seiner Herstellung mit der Schutzschicht versehen und/oder ausgebildet wird und/oder dass der Körper und/oder die zumindest eine Schutzschicht in einem additiven Herstellungsverfahren hergestellt wird. Hierdurch kann ein zusätzlicher Verfahrensschritt, nämlich das Auftragen der Schutzschicht, entfallen und die Effizienz des Herstellungsverfahrens wird weiter gesteigert. Die Schutzschicht kann beispielsweise mittels eines 3D-Druckers, der ebenfalls den Körper aufbaut, auf den Körper aufgetragen werden. Auch kann eine Vorrichtung zur Herstellung des Körpers ebenfalls einen Applikator für die Schutzschicht aufweisen.

Vorteilhaft ist es, wenn der Körper in mehreren Durchgängen einer Lösungsmittelatmosphäre ausgesetzt wird, wobei vorzugsweise zwischen zwei Durchgängen die Schutzschicht entfernt wird, eine neue Schutzschicht in dem im vorherigen Durchgang abgedeckten oder in einem im vorhereigen Durchgang nicht-abgedeckten Teilbereich hinzugefügt wird und/oder eine Konzentration der Lösungsmittelatmosphäre verändert wird. Einerseits ist es durch die mehreren Durchgänge möglich verschiedene Grade einer Oberflächenglättung zu erzielen. Andererseits ist es möglicherweise durch die Beschaffenheit des Körpers notwendig mehrere Durchgänge der Oberflächenglättung durchzuführen. Beispielsweise erfordert eine Gitterstruktur aufgrund der geringeren Wandstärke ein milderes Lösungsmittel als eine massive Struktur. Folglich müssen Körper, die sowohl eine Gitterstruktur als auch eine massive Struktur aufweisen, in mehreren Durchgängen einer Lösungsatmosphäre ausgesetzt werden, wobei bei den verschiedenen Durchgängen unterschiedlich starke Lösungsmittel eingesetzt werden. In einem der Durchgänge kann hierbei beispielsweise die massive Struktur durch die Schutzschicht abgedeckt sein. In einem anderen der Durchgänge kann entsprechend beispielsweise die Gitterstruktur durch die Schutzschicht abgedeckt sein.

Es ist denkbar, dass in mehreren Bereichen des Körpers zwischen den Durchgängen Schutzschichten Entfernt und/oder Hinzugefügt werden. Ebenfalls können beispielsweise zwischen den Durchgängen weitere Prozessschritte durchgeführt werden, wie insbesondere das oben bereits beschriebene Färben des Körpers. Durch ein Glätten der Oberfläche des Körpers in unterschiedlichen Durchgängen können die optischen Eigenschaften der Oberfläche nach beliebig variiert werden. Neben einer Veränderung der Konzentration des Lösungsmittels in den verschiedenen Durchgängen ist es ebenfalls denkbar, unterschiedliche Lösungsmittel für die verschiedenen Durchgänge zu verwenden.

Ein erfindungsgemäßer, in einem additiven Herstellungsverfahren hergestellter Körper, zeichnet sich dadurch aus, dass eine Oberfläche des Körpers gemäß dem zuvor beschriebenen Verfahren behandelt ist. Die beschriebenen Verfahrensmerkmale können hierbei einzeln oder in beliebiger Kombination vorliegen. Ein Körper, der nach dem zuvor beschriebenen Verfahren hergestellt ist, kann effizient und kostengünstig hergestellt werden. Zusätzliche Verfahrensschritte zum Entfernen oder aufrauen geglätteter Oberflächenbereiche entfallen.

Der Körper kann beispielweise in einem Zwischenschritt, nach dem additiven Herstellungsverfahren eine Markierung für ein Platzieren der Schutzschicht aufweisen. Die Markierung kann beispielsweise farblicher Natur sein, oder eine Vertiefung oder Erhöhung der Oberfläche umfassen. Der Körper kann insbesondere eine Gitterstruktur aufweisen. Eine Gitterstruktur ist eine sich wiederholende regelmäßige Struktur, die beispielsweise aus gleichen Einheitszellen aufgebaut ist. Insbesondere ist damit eine Hohlstruktur gemeint, in der nur Gitterstäbe Material des Körpers umfassen. Die Gitterstäbe können beispielsweise in Form von Kanten regelmäßiger geometrischer Körper angeordnet sein.

Weitere Vorteile der Erfindung sind in den nachfolgenden Ausführungsbeispielen beschrieben. Es zeigen:
- **Figur 1**: eine schematische Ansicht eines Körpers in einer Kammer mit Lösungsmittelatmosphäre,
- **Figur 2**: den Körper aus Figur 1 nach Durchlaufen des erfindungsgemäßen Verfahrens,
- **Figur 3**: eine schematische Ansicht eines Körpers mit einer Markierung
- **Figur 4**: eine schematische Ansicht eines Körpers mit einer Gitterstruktur.

Bei der nachfolgenden Beschreibung der Figuren werden für in den verschiedenen Figuren jeweils identische und/oder zumindest vergleichbare Merkmale gleiche Bezugszeichen verwendet. Die einzelnen Merkmale, deren Ausgestaltung und/oder Wirkweise werden meist nur bei ihrer ersten Erwähnung ausführlich erläutert. Werden einzelne Merkmale nicht nochmals detailliert erläutert, so entspricht deren Ausgestaltung und/oder Wirkweise der Ausgestaltung und Wirkweise der bereits beschriebenen gleichwirkenden oder gleichnamigen Merkmale.

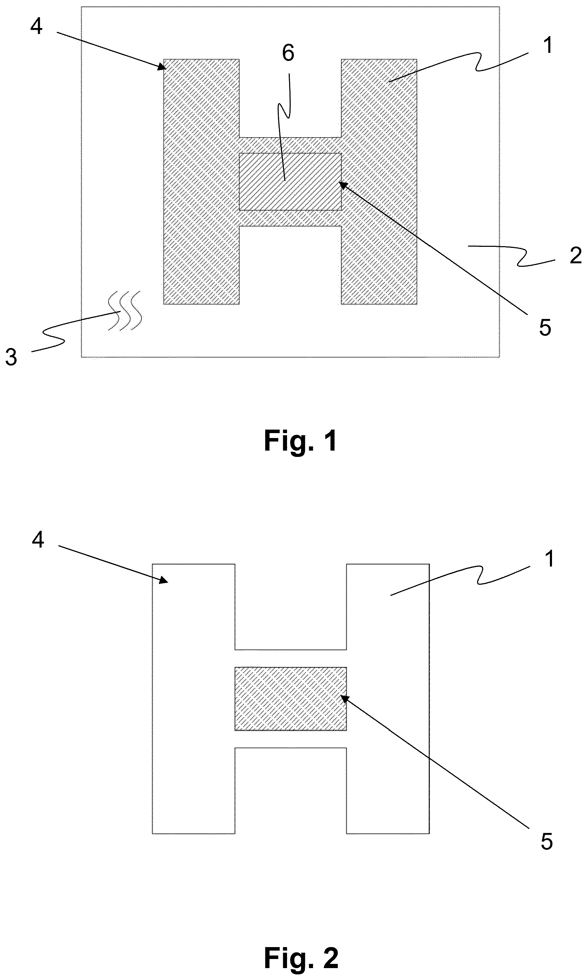

Figur 1 zeigt eine schematische Ansicht eines Körpers 1 in einer Kammer 2 mit einer Lösungsmittelatmosphäre 3. Der Körper 1 wurde in einem additiven Herstellungsverfahren hergestellt. Der Körper 1 weist nach dem additiven Herstellungsverfahren beispielsweise eine raue Oberfläche 4 auf, die in der vorliegenden schematischen Darstellung mit einer unterbrochenen Schraffur angedeutet ist. In einem Teilbereich 5 der Oberfläche 4 wurde der Körper 1 vor dem Platzieren in der Kammer 2 mit einer Schutzschicht 6 versehen. Die Schutzschicht 6 ist in der vorliegenden Darstellung mit einer durchgehenden Schraffur angedeutet.

Die Schutzschicht 6 verhindert zumindest teilweise, dass die Oberfläche 4 des Körpers 1 mit der Lösungsmittelatmosphäre 3 reagiert. Insbesondere verhindert die Schutzschicht 6 eine Reaktion der Lösungsmittelatmosphäre 3 mit der Oberfläche 4 komplett. Die Schutzschicht 6 kann beispielsweise bereits bei der additiven Herstellung des Körpers 1 hinzugefügt werden. Ebenfalls kann die Schutzschicht 6 nach der Herstellung des Körpers 1 aber vor dem Platzieren in der Kammer 2 hinzugefügt werden. Es ist ebenfalls denkbar, dass die Schutzschicht 6 in der Kammer 2 auf die Oberfläche 4 des Körpers 1 aufgebracht wird.

Die Lösungsmittelatmosphäre 3 reagiert insbesondere mit der Oberfläche 4 des Körpers 1 in den Bereichen, in denen keine Schutzschicht 6 vorgesehen ist derart, dass die Oberfläche 4 zumindest teilweise geglättet wird. Dies wird beispielsweise durch ein partielles Lösen und wieder Verfestigen des Oberflächenmaterials erreicht. Die Lösungsmittelatmosphäre 3 kann auf die bereits beschriebenen Arten hergestellt werden. Zur Sicherheit ist die Kammer 2, beispielsweise während der Präsenz der Lösungsmittelatmosphäre 3, hermetisch abgeschlossen. Der Körper 1 kann beispielsweise in der Kammer 2 auf nicht dargestellten Stützen platziert werden oder an nicht dargestellten Haken aufgehängt werden.

Figur 2 zeigt den Körper 1 der Figur 1 nach dem Entfernen des Körpers 1 aus der Kammer 2 und nach dem Entfernen der Schutzschicht 6. Die fehlende unterbrochene Schraffur auf der Oberfläche 4 des Körpers 1 außerhalb des Teilbereichs 5 soll die nun geglättete Oberfläche 4 das Körpers 1 darstellen. Im Teilbereich 5 weist die Oberfläche 4 nun beispielsweise die Rauigkeit des Ursprungszustands nach der additiven Fertigung des Körpers 1 auf. Der Teilbereich 5 eignet sich jetzt besonders für das Hinzufügen einer Funktionsbeschichtung oder beispielsweise als Klebestelle für die Verbindung mit weiteren Bauteilen. Auch nimmt die Oberfläche 4 im Teilbereich 5 nun beispielsweise eine Farbe bei einem Färben des Körpers 1 besser auf. Der Körper 1 wird nach dem Entfernen der Schutzschicht 6 in dem Teilbereich 5 mit einem weiteren nicht dargestellten Körper 1 form-, kraft- und/oder stoffschlüssig verbunden.

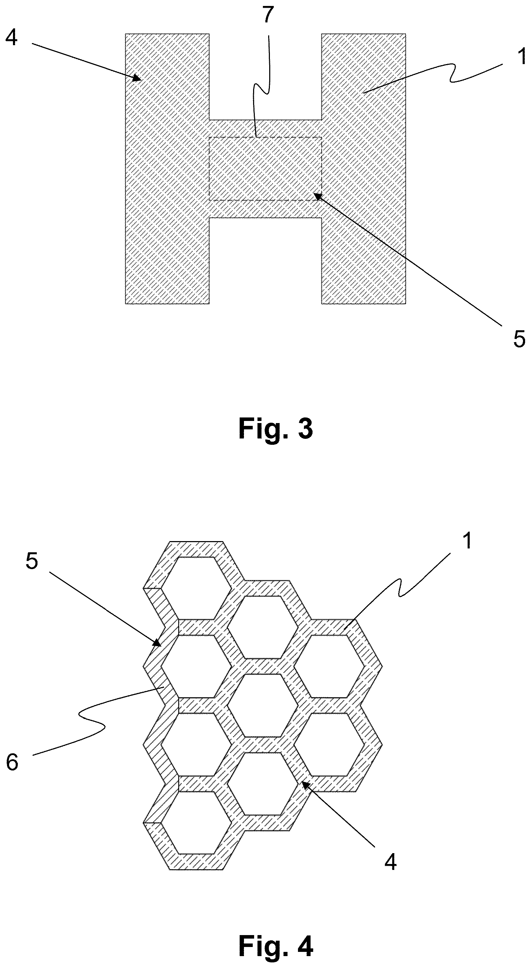

Figur 3 zeigt ein Beispiel eines Körpers 1 ähnlich dem aus Figur 1 nach einem additiven Fertigungsverfahren. Der Körper 1 ist in diesem Fall mit einer Markierung 7 für das Platzieren der Schutzschicht 6 ausgebildet. Die Oberfläche 4 weist beispielsweise in einem Rand des Teilbereichs 5 eine leicht unterschiedliche Oberflächenbeschaffenheit auf. Ebenfalls kann die Markierung 7 beispielsweise aus einer besonderen Färbung des Teilbereichs 5 bestehen. Die Markierung 7 dient dem leichteren Platzieren der Schutzschicht 5 entweder durch einen Menschen oder eine automatisierte Vorrichtung.

Figur 4 zeigt ein Beispiel eines Körpers 1 mit einer Gitterstruktur. In der Realität ist die Struktur in der Regel dreidimensional. Hier ist zur besseren Übersichtlichkeit eine zweidimensionale Struktur abgebildet. Der Körper 1 weist wie zuvor in einem Teilbereich 5 eine Schutzschicht 6 auf. Die übrige Oberfläche 4 weist die beispielsweise herstellungsbedingte Rauigkeit auf. Der Teilbereich 5 kann insbesondere für ein Zusammenfügen mit einem (nicht dargestellten) weiteren Körper 1 vorgesehen werden. In diesem Fall führt eine erhöhte Rauigkeit in dem Teilbereich 5 nach dem Glätten in der Lösungsmittelatmosphäre 3 beispielsweise zu einem verbesserten Haften eines Klebstoffs zur Verbindung der Körper 1. Bei den dargestellten Beispielen wäre aufgrund der geringeren Wandstärke bei dem Körper 1 aus Figur 4 ein milderes Lösungsmittel bzw. eine niedrigere Lösungsmittelkonzentration als bei dem Körper 1 aus den Figuren 1 bis 3 angebracht.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Körper
- 2: Kammer
- 3: Lösungsmittelatmosphäre
- 4: Oberfläche
- 5: Teilbereich
- 6: Schutzschicht
- 7: Markierung

## Patentansprüche

1. Verfahren zum Glätten einer Oberfläche (4) eines in einem additiven Herstellungsverfahren aus einem Elastomer, Thermoplast und/oder Duroplast hergestellten Körpers (1),
bei dem der Körper (1) in einer Kammer (2) platziert und anschließend einer Lösungsmittelatmosphäre (3) ausgesetzt wird, die eine Oberfläche (4) des Körpers (1) glättet, wobei die Oberfläche (4), bevor der Körper (1) in der Kammer (2) der Lösungsmittelatmosphäre (3) ausgesetzt wird, in zumindest einem Teilbereich (5) mit einer Schutzschicht (6) abgedeckt wird
**dadurch gekennzeichnet,**
**dass** der Körper (1) nach dem Entfernen der Schutzschicht (6) in dem zumindest einen Teilbereich (5) mit einem weiteren Körper, insbesondere form-, kraft- und/oder stoffschlüssig, verbunden wird.

2. Verfahren nach dem vorherigen Anspruch, **dadurch gekennzeichnet,**
**dass** die Schutzschicht (6) lösungsmitteldurchlässig ist, so dass der von der Schutzschicht (6) abgedeckte Teilbereich (5) im Vergleich zur freiliegenden Oberfläche (4) weniger stark mit der Lösungsmittelatmosphäre (3) reagiert, oder
**dass** die Schutzschicht (6) lösungsmittelundurchlässig ist, so dass der von der Schutzschicht (6) abgedeckte Teilbereich (5) nicht mit der Lösungsmittelatmosphäre (3) reagiert und in einem ursprünglichen Zustand verbleibt.

3. Verfahren nach dem vorherigen Anspruch, **dadurch gekennzeichnet, dass** der Körper (1) bei der Herstellung mit wenigstens einer Markierung (7) für ein Platzieren der Schutzschicht (6) versehen wird.

4. Verfahren nach einem der vorherigen Ansprüche, **dadurch gekennzeichnet, dass** die Schutzschicht (6) lösungsmittelresistent, abdichtend und/oder reversibel lösbar ist, wobei die Schutzschicht (6) insbesondere von einer Folie oder einem Lack gebildet ist.

5. Verfahren nach einem der vorherigen Ansprüche, **dadurch gekennzeichnet, dass** die Schutzschicht (6) zumindest teilweise aus Latex besteht.

6. Verfahren nach einem der vorherigen Ansprüche, **dadurch gekennzeichnet, dass** die Schutzschicht (6), insbesondere nach einer Entnahme des Körpers (1) aus der Kammer (2), vorzugsweise mechanisch oder chemisch, entfernt wird.

7. Verfahren nach einem der vorherigen Ansprüche, **dadurch gekennzeichnet, dass** der Körper (1) vor dem Hinzufügen und/oder nach dem Entfernen der Schutzschicht (6) eingefärbt wird.

8. Verfahren nach einem der vorherigen Ansprüche, **dadurch gekennzeichnet, dass** nach dem Entfernen der Schutzschicht (6) in dem zumindest einen Teilbereich (5) eine Funktionsbeschichtung auf den Körper (1) aufgebracht wird.

9. Verfahren nach einem der vorherigen Ansprüche, **dadurch gekennzeichnet, dass** der Körper (1) zumindest teilweise mit einer Gitterstruktur hergestellt wird.

10. Verfahren nach einem der vorherigen Ansprüche, **dadurch gekennzeichnet, dass** die Lösungsmittelatmosphäre (3) Chloroform, Tetrahydrofuran, Dimethylformamid, Dimethylacetamid, N-Methylpyrrolidon, Dimethylsulfoxid, Hexafluorisopropanol, Pyridin, Benzylalkohol, Methanol, Ethylacetat, Diethylether, Aceton, n-Hexan, Toluol, Tetrachlorkohlenstoff und/oder Ethylenglykolmonoethylether enthält.

11. Verfahren nach einem der vorherigen Ansprüche, **dadurch gekennzeichnet, dass** der Körper (1) bereits bei seiner Herstellung mit der Schutzschicht (6) versehen und/oder ausgebildet wird und/oder dass der Körper (1) und/oder die zumindest eine Schutzschicht (6) in einem additiven Herstellungsverfahren hergestellt wird.

12. Verfahren nach einem der vorherigen Ansprüche, **dadurch gekennzeichnet, dass** der Körper (1) in mehreren Durchgängen einer Lösungsmittelatmosphäre (3) ausgesetzt wird,
wobei vorzugsweise zwischen zwei Durchgängen die Schutzschicht (6) entfernt wird, eine neue Schutzschicht (6) in dem im vorherigen Durchgang abgedeckten oder in einem im vorhereigen Durchgang nicht-abgedeckten Teilbereich (5) hinzugefügt wird und/oder eine Konzentration der Lösungsmittelatmosphäre (3) verändert wird.

13. In einem additiven Herstellungsverfahren hergestellter Körper (1), **dadurch gekennzeichnet, dass** eine Oberfläche (4) des Körpers (1) gemäß einem Verfahren nach einem der vorherigen Ansprüche behandelt ist.

## Claims

1. Method for smoothing a surface (4) of a body (1) produced from an elastomer, thermoplastic and/or thermoset in an additive production method,
in which the body (1) is placed in a chamber (2) and then exposed to a solvent atmosphere (3) which smooths a surface (4) of the body (1), the surface (4) being covered with a protective layer (6) in at least one subregion (5) before the body (1) is exposed to the solvent atmosphere (3) in the chamber (2),
**characterized in that**
after the protective layer (6) has been removed, the body (1) is connected to a further body, in particular in a form-fitting, force-fitting and/or integrally bonded manner, in the at least one subregion (5).

2. Method according to the preceding claim, **characterized in that** the protective layer (6) is solvent-permeable, such that the subregion (5) covered by the protective layer (6) reacts less strongly with the solvent atmosphere (3) in comparison with the exposed surface (4), or
**in that** the protective layer (6) is solvent-impermeable, such that the subregion (5) covered by the protective layer (6) does not react with the solvent atmosphere (3) and remains in an original state.

3. Method according to the preceding claim, **characterized in that** the body (1) is provided with at least one marking (7) for placing the protective layer (6) during production.

4. Method according to one of the preceding claims, **characterized in that** the protective layer (6) is solvent-resistant, sealingly and/or reversibly releasable, the protective layer (6) being formed in particular by a film or a lacquer.

5. Method according to one of the preceding claims, **characterized in that** the protective layer (6) consists at least partially of latex.

6. Method according to one of the preceding claims, **characterized in that** the protective layer (6) is removed, preferably mechanically or chemically, in particular after the body (1) has been removed from the chamber (2).

7. Method according to one of the preceding claims, **characterized in that** the body (1) is colored before the addition and/or after the removal of the protective layer (6).

8. Method according to one of the preceding claims, **characterized in that**, after the removal of the protective layer (6), a functional coating is applied to the body (1) in the at least one subregion (5).

9. Method according to one of the preceding claims, **characterized in that** the body (1) is produced at least partially with a lattice structure.

10. Method according to one of the preceding claims, **characterized in that** the solvent atmosphere (3) contains chloroform, tetrahydrofuran, dimethylformamide, dimethylacetamide, N-methylpyrrolidone, dimethyl sulfoxide, hexafluoroisopropanol, pyridine, benzyl alcohol, methanol, ethyl acetate, diethyl ether, acetone, n-hexane, toluene, carbon tetrachloride and/or ethylene glycol monoethyl ether.

11. Method according to one of the preceding claims, **characterized in that** the body (1) is already provided and/or formed with the protective layer (6) during its production, and/or
**in that** the body (1) and/or the at least one protective layer (6) is produced in an additive production method.

12. Method according to one of the preceding claims, **characterized in that** the body (1) is exposed to a solvent atmosphere (3) in a plurality of passes,
the protective layer (6) preferably being removed between two passes, a new protective layer (6) being added in the subregion (5) covered in the preceding pass or not covered in the preceding pass, and/or a concentration of the solvent atmosphere (3) being changed.

13. Body (1) produced in an additive production method, **characterized in that** a surface (4) of the body (1) is treated according to a method according to one of the preceding claims.

## Revendications

1. Procédé pour lisser une surface (4) d'un corps (1) fabriqué dans un procédé de fabrication additif à partir d'un élastomère, d'une matière thermoplastique et/ou d'une matière thermodurcissable,
dans lequel le corps (1) est placé dans une chambre (2) et est ensuite exposé à une atmosphère de solvant (3) qui lisse une surface (4) du corps (1), la surface (4), avant que le corps (1) soit exposé à l'atmosphère de solvant (3) dans la chambre (2), étant recouverte d'une couche de protection (6) dans au moins une zone partielle (5), **caractérisé en ce que**
le corps (1), après avoir enlevé la couche de protection (6) dans l'au moins une zone partielle (5), est relié à un autre corps, en particulier par complémentarité de forme, de force et/ou de matière.

2. Procédé selon la revendication précédente, **caractérisé en ce que** la couche de protection (6) est perméable au solvant, de sorte que la zone partielle (5) recouverte par la couche de protection (6) réagit moins fortement avec l'atmosphère de solvant (3) que la surface (4) exposée, ou
**en ce que** la couche de protection (6) est imperméable au solvant, de sorte que la zone partielle (5) recouverte par la couche de protection (6) ne réagit pas avec l'atmosphère de solvant (3) et reste dans un état d'origine.

3. Procédé selon la revendication précédente, **caractérisé en ce que** le corps (1), lors de la fabrication, est pourvu d'au moins un marquage (7) pour placer la couche de protection (6).

4. Procédé selon l'une quelconque des revendications précédentes, **caractérisé en ce que** la couche de protection (6) est résistante au solvant, étanche et/ou amovible de manière réversible, la couche de protection (6) étant formée en particulier par une feuille ou un vernis.

5. Procédé selon l'une quelconque des revendications précédentes, **caractérisé en ce que** la couche de protection (6) est constituée au moins en partie de latex.

6. Procédé selon l'une quelconque des revendications précédentes, **caractérisé en ce que** la couche de protection (6) est enlevée, de préférence mécaniquement ou chimiquement, en particulier après un retrait du corps (1) de la chambre (2).

7. Procédé selon l'une quelconque des revendications précédentes, **caractérisé en ce que** le corps (1) est coloré avant l'ajout et/ou après avoir enlevé la couche de protection (6).

8. Procédé selon l'une quelconque des revendications précédentes, **caractérisé en ce qu'**après avoir enlevé la couche de protection (6) dans l'au moins une zone partielle (5), un revêtement fonctionnel est appliqué sur le corps (1).

9. Procédé selon l'une quelconque des revendications précédentes, **caractérisé en ce que** le corps (1) est fabriqué au moins en partie avec une structure réticulaire.

10. Procédé selon l'une quelconque des revendications précédentes, **caractérisé en ce que** l'atmosphère de solvant (3) contient du chloroforme, du tétrahydrofurane, du diméthylformamide, du diméthylacéta-mide, de la N-méthylpyrrolidone, du diméthylsulfoxyde, de l'hexafluoroisopropanol, de la pyridine, de l'alcool benzylique, du méthanol, de l'acétate d'éthyle, de l'éther diéthylique, de l'acétone, du n-hexane, du toluène, du tétrachlorure de carbone et/ou de l'éther monoéthylique d'éthylène glycol.

11. Procédé selon l'une quelconque des revendications précédentes, **caractérisé en ce que** le corps (1) est déjà pourvu et/ou formé de la couche de protection (6) lors de sa fabrication et/ou
**en ce que** le corps (1) et/ou l'au moins une couche de protection (6) sont fabriqués dans un procédé de fabrication additif.

12. Procédé selon l'une quelconque des revendications précédentes, **caractérisé en ce que** le corps (1) est exposé à une atmosphère de solvant (3) en plusieurs passages,
la couche de protection (6) étant de préférence enlevée entre deux passages, une nouvelle couche de protection (6) étant ajoutée dans la zone partielle (5) recouverte dans le passage précédent ou non recouverte dans le passage précédent et/ou une concentration de l'atmosphère de solvant (3) étant modifiée.

13. Corps (1) fabriqué dans un procédé de fabrication additif, **caractérisé en ce qu'**une surface (4) du corps (1) est traitée selon un procédé selon l'une quelconque des revendications précédentes.
